# EUROPEAN PATENT APPLICATION

(11) **EP 4 541 500 A1**
(43) Date of publication of application: **23.04.2025**
(21) Application number: 23803084.5
(22) Date of filing: 10.05.2023
(51) Int. Cl.: B23K 26/70, B23K 37/04, B26D 7/18, B21D 45/02

(54) **AUTOMATIC SYSTEM AND METHOD FOR REMOVING LASER-CUT PIECES OF SHEET METAL FROM THE SKELETON THEREOF**

(30) Priority: 10.05.2022 ES 202230416
(71) Applicant: Jimenez Mangas, Juan Carlos, 20301 Irun (Gipuzkoa) (ES)
(72) Inventor: SOLER CEGARRA, Jose, 08880 CUBELLES (Barcelona) (ES)
(86) International application number: PCT/ES2023/070298
(87) International publication number: WO 2023/218109

(57) **Abstract**

The invention relates to an automatic system and machine for removing laser-cut sheet metal pieces from their skeleton, which comprises a machine made of two basic pieces formed by an upper module (1) and a lower module (2), each module containing a plurality of rigid cylinders (11, 22), of a determined number, wherein the upper module (1) has mobility and suction capacity and is supported and guided by a Cartesian structure that defines the various movements and positions thereof with respect to the lower module (2), the system incorporating programmable software that determines the position and perimeter of each piece cut in the sheet and regulates the movement of the cylinders of the lower module (2) in accordance with the shape of the pieces.

## Description

### Object of the invention

The present invention relates to an automatic system and machine for removing laser-cut sheet metal pieces from their skeleton, in which the processed parts are automatically separated from the skeleton of the original sheet metal, presenting technical characteristics that implement improvements in the machines existing on the market and in the state of the art.

### Technical sector

This invention is part of the metallurgical sector, and specifically resolves the extraction of sheet metal parts that, once cut using laser technology, must be automatically collected in order to be able to classify them in an orderly manner.

### State of the art

Laser technology is one of the most widely used in sheet metal cutting due to its high precision, versatility, efficiency and speed, allowing the separation of processed parts with the required geometry and morphology from the original sheet metal. However, laser machines require continuous loading and unloading of the sheets to be cut and the cut parts, which involves moving materials from the storage point to the cutting machines and a new movement of the remaining sheet metal skeleton to a recycling or disposal point and of the processed parts to a sorting point.

This entire process involves a substantial use of time and labour when carried out manually, as is usually the case in small industries.

Most machinery manufacturers offer various solutions for the extraction of cut parts from sheet metal, but none of them provide a complete and convincing solution. In fact, there are not many solutions implemented and those that are offered are adapted to provide solutions for very specific types of production. For example, on the Trumpf L6050 machine, the removal of the skeleton of the cut sheet metal is achieved by means of hooks, so that the cut pieces are loose and are removed manually or by cranes if they are very heavy.

Starmatik is a system for removing cut parts using anthropomorphic robots and specific software, equipped with automatic systems for changing the clamping medium.

Other machines use pressurized gas (oxygen, nitrogen or CO2) once the sheet metal has been cut to extract the processed parts.

In reference to industrial property, file ES2303101T3 is cited, which refers to a *"Laser cutting installation comprising a support for sheets to be cut with separate parallel grid elements and* a *unit for unloading cut pieces comprising a pair of opposite sets of forks."* It comprises a *"unloading unit for lifting the cut pieces from the support for sheets to be cut and transporting them to an evacuation station includes a flap that movably supports a pair of opposite sets of forks, a fork housing that supports the flap and encloses a transmission assembly for moving said fork sets between an open position and a closed position. The fork sets are separated in the open position and in the closed position they have their opposite ends in adjacent relationship. The unloading unit has a support housing on which the fork housing is mounted in order to carry out a vertical movement, and a transmission means for carrying out the vertical movement of the fork housing with respect to the machine flap and the support for sheets to be cut. The discharge unit is movable between an operating position adjacent the cut sheet carrier and the evacuation station. A transmission means is provided for moving the discharge unit between the operating position and the evacuation station, and a controller is operable to move the discharge unit between the evacuation station and said operating position, move the fork assemblies to the open position, move the fork housing downwardly to position the fingers to accommodate movement in the space between the grid elements, move the fork assemblies to the closed position below the upper surface of the cut sheet carrier, move the discharge unit upwardly to raise the cut pieces and the skeleton from the cut sheet carrier and evacuate the cut pieces and the skeleton into the discharge unit from the evacuation station. The fork assemblies are formed by a plurality of forks cooperatively sized to move into the space between said grid elements and below the cut pieces and the skeleton from the upper surface of the grid elements. The drive assembly comprises a motor and a chain drive connected to the fork assemblies. The cut pieces and skeleton are deposited at the evacuation station by moving the fork assemblies to the open position. The vertical rear wall of the door has a plurality of recesses which open adjacent to the cut sheet support and into which a set of forks can move when the fork assemblies are moved to their open position. The open position allows the fork assemblies to move downwardly on opposite sides of the cut sheet support to a position in which the forks can move between the grid elements when the fork assemblies are moved to the closed position."*

The technical problem apparently solved by this proposal - loading and unloading the sheet metal cutting table before and after cutting - involves a highly complex technical solution, as it involves a plurality of mobile elements to hold the cut pieces in a gripping motion to catch, move and release said pieces. And the systems used in normal practice, as explained above, involve manual handling of the processed pieces, which limits the complete automation of the cutting process even when robotic means are used to move the pieces to the sorting and storage point.

The current offer is far from covering an interesting percentage of the demand of companies, mainly dedicated to subcontracted cutting, which have a very varied type of production with a great variety of materials, thicknesses, shapes and sizes of piece.

The applicants are not aware of the existence of a system with the advantages of the one proposed, in which the extraction of the cut pieces from the skeleton of the sheet metal is carried out quickly and with means of directly gripping said pieces without mobility as they are integrated into a single support or frame that moves with minimal movements, the entire process being automated.

### Presentation of the invention

The invention develops an automatic system and machine for removing laser-cut sheet metal pieces from their skeleton, in which it is achieved that, instead of manually removing the processed parts from the sheet metal skeleton, they are released by the action of pushers supported by springs located in an upper module, leaving the parts, already released from their skeleton, on top of a lower module to be subsequently collected and sorted by means of already known automation systems, managing to automate the entire cutting process.

This system comprises a machine basically made up of two modules (one upper and one lower) of known perimeter, normally rectangular, where each of them houses a certain number of cylinders of known length that occupy practically the entire surface of the module, perfectly coinciding when both modules face each other with a common base reference.

The cylinders of the upper module have a longitudinal hole of known diameter and at their lower end, coinciding with those of the lower module, they have a rubber or equivalent material finish, also with a hole to seal the suction that occurs in the extraction process of the cut/processed pieces. For their part, the cylinders of the lower module are blind, they lack a hole and in a preferred embodiment they do not incorporate the aforementioned rubber finish as it is not necessary for their operation. Said rubber finish can be considered in case of having to avoid the imprint of the cylinders being marked on the cut pieces by the pressure exerted on the assembly.

The upper module, which has the capacity for mobility, internally incorporates a vacuum system with which the holes of all the cylinders of said upper module are globally connected. For its part, the lower module, fixed, without the capacity for mobility, incorporates means that allow the pushing and temporary locking of those cylinders that, in the process of the system, must be activated.

The purpose of the described machine is to separate the laser-cut pieces from the skeleton of the remaining sheet metal and to do so, the modules described, with their respective cylinders and integrated technical means, act differently, interacting with each other.

The upper module is responsible for placing the sheet metal on the lower cylinder, holding it in place using its vacuum system and the suction exerted by its cylinders. In this process, when the upper module is lowered, it exerts a certain pressure that pushes the sheet metal downwards, consequently pushing the cylinders of the lower module, which are locked into the skeleton of the sheet metal, which is prepared on the laser cutting table, according to the guidelines of the corresponding software.

Once the pieces have been cut and their position and perimeter determined by the programmed software, those cylinders of the lower module that are inside the area defined by the excess material of the sheet metal or skeleton are blocked by a magnetic/mechanical mechanism or by the corresponding mechanism, while the cut pieces are lowered to a lower level at a certain distance by the pressure received from the cylinders of the upper module, these acting as pushers as they comprise springs supported on a plate and this pushing pressure of the cylinders being greater than the friction resistance of the cylinders of the lower module. Once the cut pieces are at that lower level, sunken, the upper module rises to the initial height that touches the sheet metal, sucks again, attracts the remaining material, that is, the skeleton, and removes it. Then, the cylinders of the lower module, coinciding and located under the cut pieces, rise under the pressure and push exerted by the mechanism integrated in said lower module and located below them. As a result, all the cut pieces, now lifted and released from their skeleton, remain on top of the lower module, in the same position as they were before being removed from the skeleton of the original sheet metal, ready to be removed by well-known automated means.

The system incorporates a programmable software that allows, among other actions, to determine the position and perimeter of each of the pieces cut in the sheet metal and regulate the movement of the cylinders of the lower module according to the morphology of said pieces.

Both modules - upper and lower - are supported on mobile guided plates, each with end cylinders linked to thrust means that act on said plates which, when moving, drag the modules mentioned with them. As already explained, in the case of the upper module, when the mobile guided upper plate lowers, it presses all its cylinders. In the case of the lower module, the mobile guided lower plate lowers to release the cylinders so that they can be pressed and when the upper module is removed, taking the skeleton with it, sucked by the vacuum system, this lower plate rises, presses all the cylinders from below, thus leaving them in their initial position, ready for a new extraction action.

### Description of the drawings

For a better understanding of what is described in this document, some drawings are attached, which should be analysed and considered only as an example and without any limiting or restrictive character
Figure 1.- Perspective view of the upper module
Figure 2.- Perspective view of the lower module
Figure 3.- Perspective view of the upper module with detail of the cylinders
Figure 4.- Perspective view of the lower module with detail of the cylinders
Figure 5.- Perspective view of the lower module with the metal sheet and the cut pieces, not separated.
Figure 6.- Perspective view of the upper module once it has descended onto the lower module, pressing the metal sheet against it.
Figure 7.- Perspective view of the lower module with detail of the skeleton, intended to be sucked by the upper module (not visible), and the cut pieces located at a lower level
Figure 8.- Perspective view of the lower module with detail of the cut pieces and the skeleton already removed.

### Preferred embodiment of the invention

According to these drawings, the object of this invention is an automatic system and machine for removing laser-cut sheet metal pieces from their skeleton, which comprises a machine consisting of two basic parts made up of an upper module (1) and a lower module (2) intended to face each other, the upper module (1) having the capacity to move at least in an upward and downward direction.

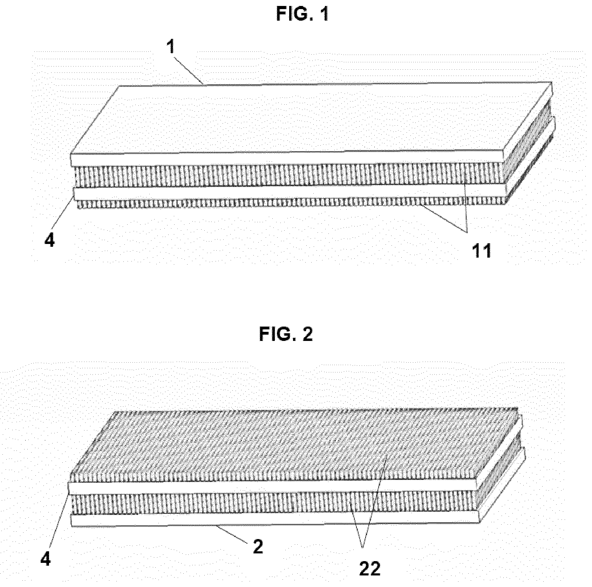

Figures 1 and 3, and 2 and 4 show, respectively, the upper (1) and lower (2) modules, of the same known perimeter, normally rectangular, each of them housing a plurality of cylinders (11) (22) in a determined number, all of them of known length and of equal diameter, which are distributed in matrix mode occupying practically the entire surface of each of the respective modules (1) (2). Thanks to this distribution, it is achieved that, when facing both modules (1) (2), their respective cylinders (11) (22) are in a coincident position.

All cylinders (11) (22) have the capacity for vertical movement, in an upward and downward direction, that is, they rise and fall as required by the operation of the machine, although said vertical movement responds to and is activated based on different technical means.

Likewise, both groups of cylinders (11) (22) have different technical characteristics based on the module (1) (2) in which they are installed and the way in which they operate.

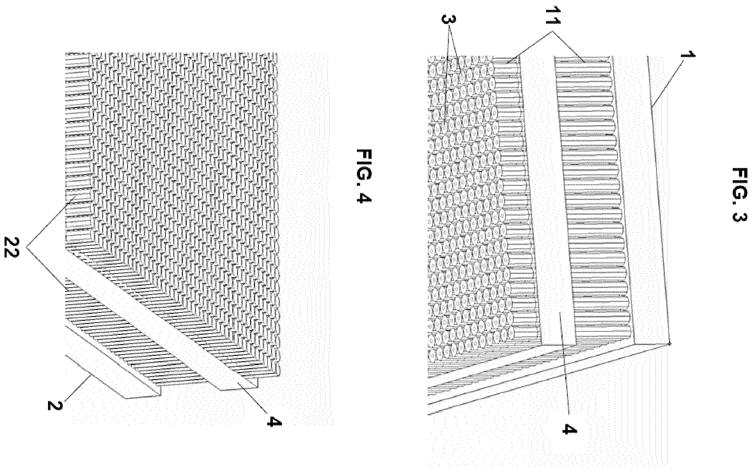

As shown in figure 3, the cylinders (11) of the upper module (1) have a longitudinal hole (3) of known diameter and incorporate at their lower end, coinciding with the upper outer end of the cylinders (22) of the lower module (2) when they are facing each other, a rubber or equivalent material finish also with a hole. These holes (3) are globally connected to a vacuum system or pump integrated internally in said upper module (1) and it is precisely these holes (3) that allow the suction action that intervenes decisively in the operation of the machine. Its vertical mobility responds to the pressure exerted by springs.

For their part, the cylinders (22) of the lower module (2) are blind and without any hole and their vertical mobility responds to technical means integrated internally in said lower module (2), which, when activated, allow the pushing, temporary locking and retreat of those certain cylinders that, according to each cutting process, coincide with the cut pieces (B), as explained in later paragraphs. These means can be diverse: electromechanical, magnetic/mechanical, hydraulic, etc., with their corresponding wiring, electrical panel, etc.

It should be noted that each module (1) and (2) incorporates an intermediate perimeter plate (4) as a guide to control the position of the cylinders (11) (22).

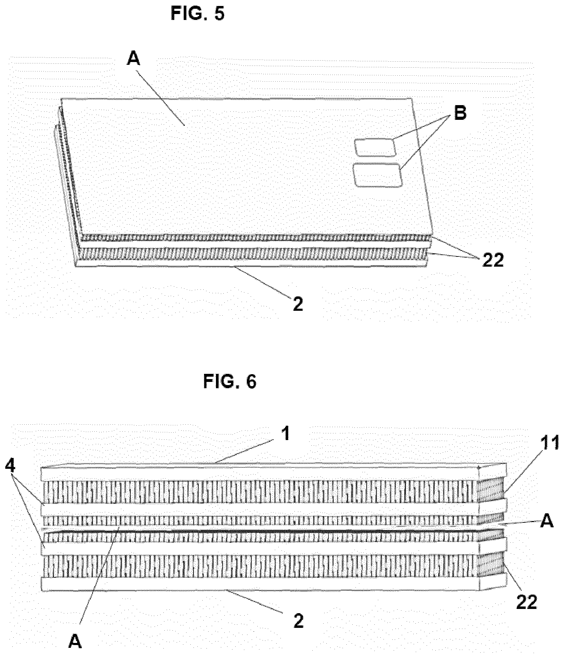

Figures 5 to 8 show the operation of the claimed system, together with the behavior of the upper (1) and lower (2) modules, with their respective cylinders (11) (22), which make up the machine that executes such a system.

The system or process of extraction or release of the cut and processed pieces (B) is the one explained below, with different phases in which the mobility and suction capacity of the upper module (1) intervenes, which is supported and guided by a Cartesian structure that defines its different movements and positions with respect to the lower module (2), such positions being the following:
Position 1.- The upper module (1) is in a pre-established rest position (parking position)
Position 2.- The upper module (1) is in the sheet metal collection position (A) for cutting
Position 3.- The upper module (1) is in position above the cutting table to leave the sheet metal
Position 4.- The upper module (1) is in position above the lower static module
Position 5.- The upper module (1) is in position above the sheet metal scrap container

The phases of the process are the following.

### Phase a)

When the process starts, the upper module (1) moves from its initial position (position 1) to position 2, where it moves vertically until it comes into contact with the sheet metal, activating its integrated vacuum pump and sucking said sheet metal (A) through the holes in its cylinders (11).

### Phase b)

It then rises vertically and moves to the cutting table (position 3), lowering vertically until it comes into contact with the table, deactivating the vacuum and releasing the sheet metal (A) so that it can be cut, and moves back to position 1, that is, the parking area.

### Phase c)

Once the pieces have been cut, the upper module (1) moves back to the cutting table, descends until it comes into contact with the sheet metal (A) and with all the cut pieces (B), activates the suction and transports the sheet metal (A) and cut pieces (B) assembly to position 4, that is, it is placed on the lower module (2), descending until it comes into contact with it (2). At this moment, the cylinders (11) (22) of both modules (1) (2), dimensionally matching, are facing each other, with the sheet metal (A) interposed between both modules (1) (2) and in direct contact with the cylinders (11) (22) being visible in figure 6. For a better understanding of the process, figure 5 shows only the lower module (2) with the sheet metal (A) and the cut pieces (B), without separating one from the other, after the cutting process.

### Phase d)

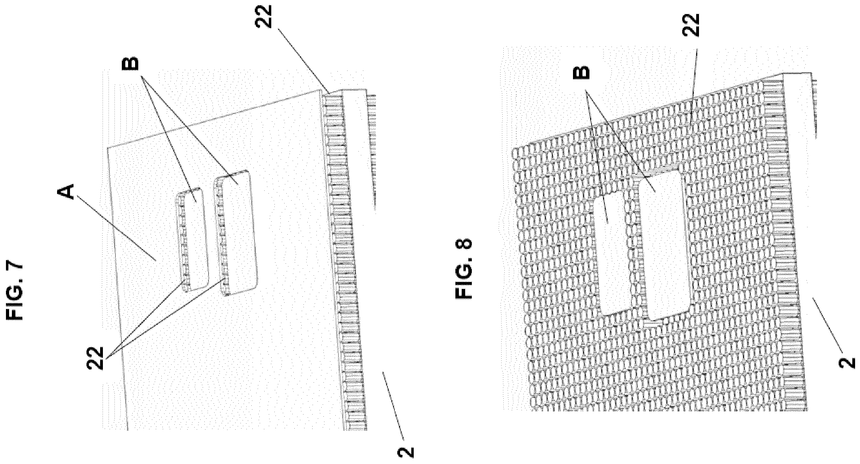

Once both modules are facing each other, the vacuum pump and the suction of the upper module (1) are deactivated, which releases the set of sheet metal (A) and cut pieces (B) onto the lower module (2), pressing them with their own weight on it, and based on the information from the programmed software and knowing the position and perimeter of each of the cut pieces (B) in the sheet metal (A), a series of concatenated actions occur.
- the cylinders (22) located inside the area defined by the excess sheet material (A), i.e. the skeleton, are temporarily blocked by means of the mechanism integrated in the lower module (2), and remain locked.
- the cylinders (11) of the upper module (1) facing the cylinders (22) of the lower module (2) are forced to compress by means of their springs.
- On the contrary, the cylinders (22) coinciding with the area of the cut pieces (B) yield to the push of the corresponding cylinders (11) of the upper module (1), as shown in figure 7.
- As a consequence, the cut pieces (B) go down to a lower level due to the pressure they receive from said cylinders (11) of the upper module (1), cylinders (11) that work as pushers by having springs supported on a plate.

### Phase e)

Next, the upper module (1) is raised to the initial contact position of the sheet (A), activates the vacuum pump and sucks only the skeleton of the sheet (A) since, as the cut pieces (B) are sunk in the lower module (2), the cylinders (11) of the upper module (1) do not reach them and they are not sucked, as shown in figure 8.

### Phase f)

To finish the process, the upper module (1) moves with the skeleton of the sheet (A) to position 5 where it deactivates the vacuum and said skeleton falls into a container.

### Phase g)

For its part, the lower module (2), in turn, pushes or propels the sunken cylinders (22) outwards again, leaving the cut pieces (B) in the same position in which they had been programmed for cutting, already extracted or released from the skeleton of the sheet (A), to later remove them and arrange them using a standard automation.

Based on all that has been described, the advantages of using an automatic system for the extraction of cut sheet metal parts, which is claimed throughout the laser cutting process to obtain processed parts, are obvious.

There is no doubt that a laser machine needs to load sheet metal for cutting and extract the processed parts continuously. Manual removal of these processed parts means stopping the machine and requiring handling and sorting time, which implies significant economic costs. The new system involves automatic loading and unloading, industrializing the entire process, with the savings in labour and machine downtime that this entails.

Due to its technical characteristics, it is a multipurpose system, suitable for working with any material even when it is designed for sheet metal, adaptable to sheets of different volumes, that is, sheets of thin, medium, thick thickness, etc. and with pieces of various types.

It provides an optimal and effective solution not only for the extraction of the processed / machined pieces but also for the removal of the skeleton, that is, the remains or scraps of the original sheet for later use or utilization, being a system of high precision, versatility, speed and efficiency.

It is not considered necessary to extend this description in order for any expert in the field to understand the scope of the invention and the advantages derived from it. The materials, shape, size and arrangement of the elements may be varied as long as this does not imply an alteration in the essence of the invention. The terms in which this specification has been drafted must always be taken in a broad and non-limiting sense.

## Claims

1. st An automatic system and machine for removing laser-cut sheet metal pieces from their skeleton, **characterized in that** it comprises a machine consisting of two basic parts made up of an upper module (1) and a lower module (2), both of the same known perimeter and intended to face each other, the upper module (1) having the capacity to move at least in an upward and downward direction, each of the upper (1) and lower (2) modules housing a plurality of cylinders (11) (22) in a determined number, all of which are cylinders (11) (22) of known length and of equal diameter and all of them being distributed in matrix mode occupying practically the entire surface of each of their respective modules (1) (2), such that when both upper (1) and lower (2) modules face each other, their respective cylinders (11) (22) are in a coincident position.

2. ^{nd} Machine for removing laser-cut sheet metal pieces from their skeleton, according to claim 1, **characterized in that** the cylinders (11) (22) have the capacity for vertical movement, in an upward and downward direction.

3. rd Machine for removing laser-cut sheet metal pieces from their skeleton, according to claim 1, **characterized in that** the cylinders (11) of the upper module (1) have a longitudinal hole (3) of known diameter and incorporate at their lower end a rubber or rubber finish or equivalent material also with a hole, the holes (3) of all the cylinders (11) being globally connected to a vacuum system or pump integrated internally in said upper module.

4. th Machine for removing laser-cut sheet metal pieces from their skeleton, according to the 2nd claim, **characterized in that** the vertical mobility of the cylinders (11) of the upper module (1) is activated by the pressure exerted by springs.

5. th Machine for removing laser-cut sheet metal pieces from their skeleton, according to the 2nd claim, **characterized in that** the cylinders (22) of the lower module (2) are blind and their vertical mobility responds to technical means integrated internally in said lower module (2), which, when activated, allow the pushing, temporary locking and recoil of certain determined cylinders.

6. th Machine for removing laser-cut sheet metal pieces from their skeleton, according to claim 5, **characterized in that** the technical means are electromechanical.

7. th Machine for removing laser-cut sheet metal pieces from their skeleton, according to claim 5, **characterized in that** the technical means are magnetic

8. th Machine for removing laser-cut sheet metal pieces from their skeleton, according to claim 5, **characterized in that** the technical means are hydraulic

9. th Machine for removing laser-cut sheet metal pieces from their skeleton, according to claim 1, **characterized in that** each module (1) and (2) incorporates an intermediate perimeter plate (4) as a guide to control the position of the cylinders (11) (22).

10. th Automatic system for removing laser-cut sheet metal pieces from their skeleton, according to the previous claims, **characterized in that** it consists of different phases in which the mobility and suction capacity of the upper module (1) intervenes, which is supported and guided by a Cartesian structure that defines its different movements and positions with respect to the lower module (2), the system incorporating programmable software that determines the position and perimeter of each of the pieces cut in the sheet metal and regulates the movement of the cylinders of the lower module (2) according to the morphology of said pieces.

11. th Automatic system for removing laser-cut sheet metal pieces from their skeleton, according to claim 10, **characterised in that** the extraction process is as follows:
a) Movement of the upper module (1) from its initial resting position to a sheet metal collection position (A), where it moves vertically until it comes into contact with the sheet metal, activating its integrated vacuum pump and sucking said sheet metal through the holes in its cylinders (11).
b) Vertical elevation and transfer of the upper module (1) to the cutting table, lowering it vertically until it comes into contact with the table, deactivating the vacuum, releasing the sheet metal so that it can be cut and moving it to the resting position.
c) Once the sheet metal (A) has been cut, the upper module (1) is moved to the cutting table, descending until it comes into contact with the sheet metal (A), with all the cut pieces (B), activating the suction, transporting, positioning, descending and placing the sheet metal (A) on the lower module (2), leaving the cylinders (11) (22) of both modules (1) (2) facing each other and with the sheet metal (A) interposed between them and in direct contact with the cylinders (11) (22).
d) Deactivation of the vacuum pump of the upper module (1) which releases the set of sheet metal (A) and cut pieces (B) onto the lower module (2), pressing them with their own weight on it, and based on the information from the programmed software and knowing the position and perimeter of each of the pieces cut in the sheet metal, when the upper module (1) descends with the sheet metal (A) on the lower module (2), a series of concatenated actions occur.
- The temporary blocking and interlocking, based on the programmed software, of the cylinders (22) of the lower module (2) that are located inside the area defined by the excess material of the sheet (A), that is, the skeleton.
- The compression of the cylinders (11) of the upper module (1), facing the cylinders (22) of the lower module (2), by means of their springs.
- The downward movement of the cylinders (22) coinciding with the area of the cut pieces (B), which yield to the push of the corresponding cylinders (11) of the upper module (1).
- Movement to a lower level of the cut pieces (B) due to the pressure and push they receive from the cylinders (11) of the upper module (1).
e) Lifting the upper module (1) to the initial contact position of the sheet (A), activating the vacuum pump and suction of the remaining sheet (A) or skeleton.
f) Moving the upper module (1) and transferring the remaining sheet (A) or skeleton to a scrap container, deactivating the suction and the skeleton falling into it.
g) Pushing the sunken cylinders (22) of the lower module (2) outwards, leaving the cut pieces (B) in the same position in which they had been programmed for cutting, extracted or released from the skeleton of the sheet (A), to later remove them and arrange them using a standard automation.
